(19) Europäisches Patentamt
European Patent Office
Office européen des brevets

(11) Numéro de publication: **0 011 581**
**B1**

(12) **FASCICULE DE BREVET EUROPEEN**

(45) Date de publication du fascicule du brevet: **23.06.82**

(51) Int. Cl.³: **C 04 B 13/24**

(21) Numéro de dépôt: **79420051.9**

(22) Date de dépôt: **19.10.79**

(54) **Utilisation de retardateurs de prise dans des compositions à base de plâtre, de gypse ou d'anhydrite et procédé pour la préparation de telles compositions.**

(30) Priorité: **23.10.78 FR 7830969**

(43) Date de publication de la demande:
**28.05.80 Bulletin 80/11**

(45) Mention de la délivrance du brevet:
**23.06.82 Bulletin 82/25**

(84) Etats contractants désignés:
**AT BE CH DE GB IT NL**

(56) Documents cités:
**CH - A - 452 890**
**FR - A - 2 364 869**
**US - A - 3 121 702**

**TRANSACTIONS BRITISH CERAMIC SOCIETY, vol. 69, mars 1970, no. 2, Stoke-on-Trent GB A. E. SHEER "Plaster compositions" page 39A abrégé no. 666/70**

(73) Titulaire: **MANUFACTURE DE PRODUITS CHIMIQUES PROTEX *Société anonyme dite:***
**2, place Joffre**
**Paris 7ème, Seine (FR)**

(72) Inventeur: **Joseph, Christian**
**Avenue des Tilleuls**
**F-37110 Chateaurenault (FR)**

(74) Mandataire: **Maureau, Bernard et al,**
**Cabinet GERMAIN & MAUREAU Le Britannia - Tour C 20, Boulevard Eugène Déruelle**
**F-69003 Lyon (FR)**

**EP 0 011 581 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Utilisation de retardateurs de prise dans des compositions à base de plâtre, de gypse ou d'anhydrite et procédé pour la préparation de telles compositions

La présente invention concerne l'utilisation de retardateurs de prise dans des compositions à base de plâtre, de gypse ou anhydrite, utilisées dans l'enduisage au plâtre et pour d'autres préparations à base de gypse dans les industries du bâtiment, des matériaux de construction et de sculpture.

La plâtre, produit bon marché, d'une fabrication facile, d'un approvisionnement très large, pourrait, grâce à ses caractéristiques spécifiques:

— il est ignifuge,

— c'est un régulateur du degré hygrométrique: il absorbe ou restitue la vapeur d'eau,

— c'est un isolant thermique: son coefficient de conductivité est égal à 0,4 Kcal/m.h.°C,

— c'est un isolant phonique,

constituer un matériau de liaison et de construction de qualité si, à l'emploi, il ne présentait un certain nombre d'inconvénients graves, dont le plus gênant est une vitesse de prise beaucoup trop rapide.

En effet, les plâtres ont tendance à durcir, c'est-à-dire à faire prise, très rapidement après mélange avec de l'eau. Le mécanisme de durcissement consiste en une hydratation de la majeure partie du sulfate de calcium hémihydraté (1/2 $H_2O$) en dihydrate (2 $H_2O$) en suspension aqueuse, ce qui conduit à la formation d'une masse cohérente par "enchevêtrement" des cristaux du dihydrate. De plus, la rapidité de prise est d'autant plus grande que la quantité d'eau se rapproche davantage de la quantité nécessaire à l'hydratation seule et que la mouture est plus fine. Cette quantité d'eau est de l'ordre de 25% en poids de plâtre. Aussi, pratiquement, on gâche le plâtre avec un très grand excès d'eau pour éviter une prise trop brutale et permettre sa mise en oeuvre. Malgré cet artifice, on ne peut cependant préparer et appliquer que de faibles quantités de plâtre dans un intervalle de temps nécessairement bref, avec en plus comme conséquence gênante de ce grand excès d'eau, l'obtention d'un liant qui, une fois sec, est très poreux et assez peu résistant méchaniquement.

Ainsi, les industries du bâtiment, des matériaux de construction et de la sculpture, qui emploient sur une grande échelle des compositions à base de plâtre de gypse ou anhydrite, sous la forme de plâtre calciné, seules ou mélangées à de la chaux, à du sable et à des agrégats légers comme la perlite et les dérivés de cellulose, souhaitent pouvoir allonger le temps de prise de leurs compositions.

Il y a déjà eu de nombreuses tentatives en vue d'allonger le temps de prise, mais aucune n'a donné un résultat entièrement satisfaisant à cause d'effets secondaires souvent fort gênants.

On a proposé, par exemple, d'utiliser à cet effet l'acide tartrique, mais l'effet que l'on peut obtenir ainsi n'est pas très important.

On a également proposé d'ajouter des hydrolysats de protéines, d'origines animale ou végétale. Mais ces hydrolysats de protéines sont des mélanges complexes, dont la composition dépend d'une part des matières premières utilisées (dont la régularité n'est pas la principale qualité) et d'autre part des procédés d'hydrolyse qui en général sont assez mal maîtrisés, ce qui conduit à des efficacités retardatrices non constantes, pouvant varier considérablement d'une opération sur l'autre. De plus, les retardateurs de ce type ont généralement des odeurs caractéristiques très fortes, une mauvais stabilité au stockage; ils contribuent à la formation de mousse durant les opérations de préparation et/de mise en oeuvre du liant, et bien souvent provoquent des moisissures ainsi que des colorations néfastes dans les compositions à base de plâtre.

Par ailleurs, les retardateurs de prise, tels l'acide phosphorique ou citrique, l'hexamétaphosphate de soude, la magnésie, soit demandent une quantité d'eau de gâchage plus importante que la plâtre pur à consistance identique (fluidité constante), soit provoquent ultérieurement des modifications des propriétés finales des plâtres ainsi traités, telles que l'apparition d'efflorescences, de cloques, de manque d'adhérence et même la destruction des peintures.

On a déjà proposé d'adjointre à des compositions à base de plâtre certains polymères acryliques; c'est ainsi que l'US P. 3 121 702 traite de polymères de poids moléculaire élevé qui agissent comme retardateurs d'absorption, c'est-à-dire sur la quantité d'eau que peut absorber un objet moulé en plâtre alors que les retardateurs de prise de plâtre agissent au niveau de la constitution du réseau cristallin et de la vitesse de prise, donc de durcissement du plâtre lors de sa fabrication. Certains des polymères décrits dans l'US P. 3 121 702 agissent de plus comme retardateurs de prise lorsque leur teneur dans les compositions est de 2% en poids par rapport au poids de plâtre sec.

Les polymères acryliques décrits dans le brevet français 2 364 869 outre leurs poids moléculaires élevés (2000 à 75000), ne peuvent agir seuls mais nécessitent, pour exercer une action efficace et contrôlée d'inhibition de la prise, l'adjonction d'un agent promoteur (sel de fer, cuivre ou aluminium) neutralisant cet effet d'inhibition.

La demanderesse a découvert que l'addition de certains polymères acryliques de bas poids moléculaire à l'eau de gâchage du plâtre ou d'autres préparations à base de plâtre additionné d'autres liants (chaux par exemple) ou de granulats (sable, poudre de pierre, perlite, dérivés de cellulose ...) permettait d'obenir des temps de prise notablement allongés.

Le terme "plâtre" doit être compris comme englobant tout produit obtenu par déshydratation et pulvérisation plus ou moins poussées de matières premières naturelles ou artificielles (gypse ou anhydrite) contenant essentiellement du sulfate de chaux hydraté.

C'est ainsi que la présente invention a pour object l'utilisation dans des compositions à base de plâtre de gypse ou anhydrite de retardateurs de prise constitués de polymères ou copolymères acryliques hydrosolubles de bas poids moléculaire de formule générale;

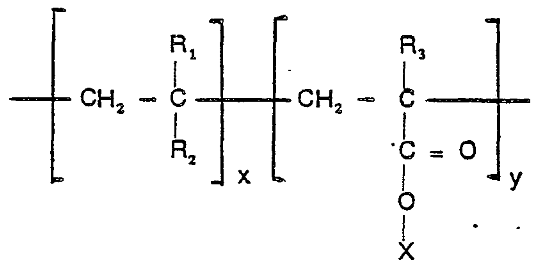

dans laquelle x et y désignent les rapports molaires desmonomères, et obtenus par polymérisation de:

(x) 0 à 40 moles pour 100 moles au total d'un ou plusieurs monomères de formule:

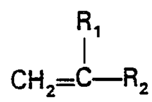

(II)

dans laquelle:

$R_1$ est un atome d'hydrogène ou un radical méthyl —$CH_3$

$R_2$ est:

— un groupe acide

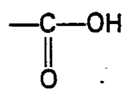

ou — un groupe ester

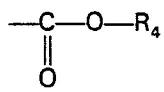

dans lequel $R_4$ est un radical alkyle inférieur contenant de 1 à 4 atomes de carbone,

ou — un groupe amide

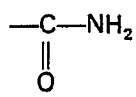

ou — un groupe nitrile —C≡N

(y) 60 à 100 moles pour 100 moles au total, d'un monomère de formule:

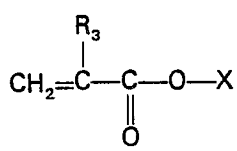

(III)

dans laquelle:

$R_3$ est un atome d'hydrogène ou un radical méthyl —$CH_3$

X est un atome de sodium, de potassium, de lithium, de calcium, de magnésium, ou un groupe ammonium —$NH_4$.

La caractéristique principale des polymères utilisés comme retardateurs de prise selon l'invention est que leur poids moléculaire, détermine par des mesures de viscosité intrinsèque en milieu aqueux, est inférieur à 1000.

Comme exemples de composés de formule II, on peut notamment citer: l'acide acrylique, l'acide méthacrylique, l'acrylate de méthyle, l'acrylate d'éthyle, l'acrylate de propyle, l'acrylate de butyle, le méthacrylate de méthyle, le méthacrylate d'éthyle, le méthacrylate de propyle, le méthacrylate de butyle, l'acrylamide, la méthacrylamide, l'acrylonitrile, le méthacrylonitrile.

Comme exemples de composés de formule III, on peut notamment citer; le sel de sodium de l'acide acrylique, le sel de potassium de l'acide acrylique, le sel de lithium de l'acide acrylique, le sel de calcium de l'acide acrylique, le sel de magnésium de l'acide acrylique, le sel d'ammonium de l'acide acrylique, le sel de potassium de l'acide méthacrylique, le sel de lithium de l'acide méthacrylique, le sel de calcium de l'acide méthacrylique, le sel de magnésium de l'acide méthacrylique, le sel d'ammonium de l'acide méthacrylique.

Les polymères ou copolymères acryliques hydrosolubles de bas poids moléculaire de formule générale (I) décrits précédemment, peuvent être préparés par différentes voies bien connues de la technique telles que polymérisation radicalaire en émulsion ou en solution avec arrêteur de chaînes classiques pour règler le poids moléculaire.

On peut utiliser les retardateurs de prise selon l'invention sous forme de poudre lorsqu'ils sont obtenus sous cette forme, ou plus généralement sous forme de solution aqueuse de concentration pouvant attendre 60—70% selon la nature et la pourcentage des constituants (II) et (III).

L'addition au plâtre ou composition à base de plâtre peut se faire à raison de 0,001 à 2 p.p.c. (partie pour cent) de préférence de 0,005 à 0,5 p.p.c. en sec par rapport au plâtre. Elle dépend aussi du retard que l'on désire dans le cas d'espèce.

Les retardateurs de prise selon l'invention peuvent être:

— ou pré-mélangés au plâtre à sec quand ils sont conditionnés sous forme de poudre;

— ou très facilement introduits dans l'eau de gâchage quand ils se présentent sous forme liquide, soit en l'état, soit sous forme de solution diluée lorsque le dosage est trop difficile à réaliser à la concentration d'origine.

On peut utiliser ces retardateurs de prise dans le plâtre, seuls ou en association avec d'autres agents auxiliaires (agents dispersants, moussants, réduisant l'eau hydrofuges, fongicides, matières colorantes . . .) ou avec d'autres liants (chaux par exemple) ou enfin avec des agrégats minéraux ou organiques (sable, poudre de pierre, perlite, dérivés de cellulose . . .), dans le but de réaliser soit un béton, soit un mortier, soit des enduits divers.

La présente invention sera d'ailleurs mieux comprise à l'aide des exemples suivants qui décrivent, de façon non limitative, les améliorations concernant l'allongement du temps de prise, obtenues à l'aide des retardateurs selon l'invention.

Dans ces exemples, les parties pour cent sont en poids, sauf indication contraire. Tous les essais ont été effectués avec du plâtre fin de construction dénommé symboliquement "PFC 2" selon la norme française NF/B 12 301.

Exemple 1

On effectue des mesures de durée de début de prise sur des mélanges d'eau et de plâtre contenant des doses croissantes de polymères acryliques conformes à l'invention et de polymères acryliques non conformes à l'invention, c'est-à-dire dont le poids moléculaire est supérieur à 1000, selon une méthode adaptée de la norme française NF/B 12 401 paragraphe 2—321: début de prise.

*Principe:* On détermine la quantité d'eau par rapport au plâtre additionné ou non d'adjuvant, pour qu'un volume défini du mélange donne un étalement déterminé, et sur le mélange ainsi obtenu on détermine le début de prise.

*Mode opératoire:* On pèse 120 g d'eau distillée à 20° ±1°C dans un bécher, 200 g de plâtre "PFC 2" dans un autre. On verse, en moins de 30 secondes, le plâtre dans l'eau en agitant. On poursuit l'agitation pendant une durée totale de 1 minute 30 secondes. On verse alors la pâtre obtenue dans un cylindre en acier inoxydable de diamètre intérieur 50 mm et de hauteur 50 mm posé sur une plaque en verre. On arase la surface de la pâte au niveau supérieur du cylindre. Après 15 secondes d'attente, on soulève brusquement le cylindre: la pâte s'étale. On cherche à obtenir une galette dont la moyenne de deux diamètres perpendiculaires est comprise entre 15 et 16 cm. S'il n'en est pas ainsi, on modifie la quantité d'eau dans le sens convenable. On détermine alors le début de prise en chambre conditionnée (20 ± 1°C, 65% HR) sur la galette de pâte de consistance convenable (15 cm < Ø < 16 cm). Pour cela, à intervalle régulier, on passe légèrement une lame de couteau (maintenu dans un plan vertical) et on considère qu'il y a début de prise quand les lèvres de la coupure ne se referment plus. La durée de début de prise est comptée à partir de la mise en contact du plâtre et de l'eau.

Polymères acrylique testés:

— polymère acrylique A: polyacrylate de soude de poids moléculaire 500—600 (selon l'invention);

— polymère acrylique B: polyacrylate de soude de poids moléculair 1000—1200;

— polymère acrylique C: acide polyacrylique partiellement neutralisé à la soude (70% de groupe acide neutralisé de poids moléculaire 500—600 (selon l'invention);

— polymére acrylique D: acide polyacrylique partiellement neutralisé à la soude (70% de groupe acide neutralisé) de poids moléculaire 1000—1200.

Les résultats sont présentés dans le tableau I.

Ces résultats montrent que les polymères acryliques de poids inférieur à 1000, selon l'invention, allongent considérablement le temps de prise du plâtre, par rapport au plâtre sans additif ou contenant des polymères acryliques de poids moléculaire supérieur à 1000.

TABLEAU I

| ADDITIF / durée de début de prise (minutes) | DOSE p.p.c. en sec/ plâtre | Polymère acrylique A selon l'invention | Polymère acrylique B | Polymère acrylique C selon l'invention | Polymère acrylique D |
|---|---|---|---|---|---|
| plâtre pur | 0 | 26 minutes | 26 minutes | 26 minutes | 26 minutes |
| plâtre avec additif | 0,005 | 36 minutes | 27 minutes | 35 minutes | 26 minutes |
| | 0,01 | 72 minutes | 28 minutes | 68 minutes | 27 minutes |
| | 0,03 | 195 minutes | 28 minutes | 180 minutes | 27 minutes |
| | 0,05 | 540 minutes | 29 minutes | 570 minutes | 28 minutes |
| | 0,1 | 1020 minutes | 31 minutes | 1110 minutes | 29 minutes |

Exemple 2

On effectue des mesures de durée de début de prise sur des mélanges d'eau et de plâtre contenant des doses croissantes de polymères acryliques conforme à l'invention et de polymères acryliques non conformes à l'invention, selon le même principe et le même mode opératoire que dans l'exemple I.

Polymères acryliques testés:

— polymère acrylique I: polyméthacrylate de potassium de poids moléculaire 600—700, selon l'invention;

— polymère acrylique J: polyméthacrylate de potassium de poids moléculaire 1000—1200;

— polymère acrylique K: acide polyméthacrylique partiellement neutralisé à la potasse (70% de groupes acides neutralisés) de poids moléculaire 600—700, selon l'invention;

— polymère acrylique L: acide polyméthacrylique partiellement neutralisé à la potasse (70% de groupes acides neutralisés) de poids moléculaire 1000—1200.

Les résultats sont présentés dans le tableau IV.

Ces résultats montrent de nouveau que les polymères acryliques de poids moléculaire inférieur à 1000 allongent considérablement les temps de prise du plâtre, par rapport au plâtre sans additifs ou contenant des copolymères acryliques de poids moléculaire supérieur à 1000.

| ADDITIF / durée de début de prise (minutes) | DOSE p.p.c. en sec/ plâtre | Polymère acrylique I selon l'invention | Polymère acrylique J | Polymère acrylique K selon l'invention | Polymère acrylique L |
|---|---|---|---|---|---|
| plâtre pur | 0 | 26 minutes | 26 minutes | 26 minutes | 26 minutes |
| plâtre avec additif | 0,005 | 34 minutes | 26 minutes | 35 minutes | 26 minutes |
| | 0,01 | 58 minutes | 27 minutes | 60 minutes | 27 minutes |
| | 0,03 | 115 minutes | 28 minutes | 125 minutes | 28 minutes |
| | 0,05 | 240 minutes | 29 minutes | 285 minutes | 29 minutes |
| | 0,1 | 580 minutes | 32 minutes | 615 minutes | 31 minutes |

Bien entendu, diverses modifications peuvent être apportées par l'homme de l'art aux dispositifs ou procédés qui viennent d'être décrits uniquement à titre d'exemples non limitatifs sans sortir du cadre de l'invention.

**Revendications pour les Etats contractants: BE, CH, DE, GB, IT, NL**

1. Utilisation dans des compositions à base de plâtre de gypse ou anhydrite de retardateurs de prise, constitués par des polymères ou copolymères acryliques hydrosolubles de poids moléculaire inférieur à 1000 et présentant la formule générale:

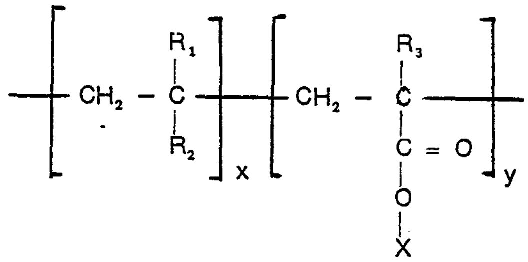

(I)

dans laquelle x et y désignent les rapports molaires des monomères, et obtenus par polymérisation de:

(x) 0 à 40 moles pour 100 moles au total d'un ou plusieurs monomères de formule:

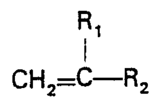

(II)

dans laquelle:

$R_1$ est un atome d'hydrogène ou un radical méthyl $—CH_3—$

$R_2$ est:

— un groupe acide 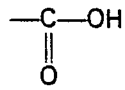

— ou groupe ester 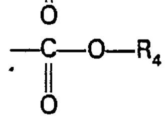

dans lequel $R_4$ est un radical alkyle inférieur contenant de 1 à 4 atomes de carbone

— ou un groupe amide 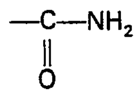

— ou un groupe nitrile $—C{\equiv}N$

(y) 60 à 100 moles pour 100 moles au total, d'un monomère de formule:

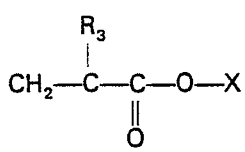

(III)

dans laquelle $R_3$ est un atome d'hydrogène ou un radical méthyl $—CH_3$

X est un atome de sodium, de potassium, de lithium, de calcium, de magnésium, ou un groupe ammonium $—NH_4$.

2. Utilisation des retardateurs de prise selon la revendication 1 comme additifs à du plâtre contenant de petites quantités de chaux.

3. Utilisation des retardateurs de prise selon les revendications 1 et 2 en association avec d'autres agents auxiliaires pour plâtre (agents dispersants, moussants, réduisant l'eau, hydrofuges, fongicides, matières colorantes).

4. Procédé de préparation et de mise en oeuvre de compositions de plâtre de gypse ou anhydrite, ou de mélanges à base de plâtre, caractérisé en ce qu'il consiste à prémélanger au plâtre à sec, quand sa présentation est sous forme de poudre, ou à ajouter à l'eau de gâchage du plâtre, un retardateur de prise selon l'une quelconque des revendications 1 à 3 dans une teneur variant entre 0,001 et 2 parties

pour cent en poids et se situant de préférence entre 0,005 et 1 partie pour cent, teneur exprimée en matière sèche par rapport au plâtre.

5. Procédé visant à allonger le temps de prise de compositions à base de plâtre de gypse ou anhydrite, caractérisé en ce qu'on leur ajoute un ou plusieurs retardateurs selon l'une quelconque des revendications 1 à 4.

**Revendications pour l'Etat contractant: AT**

1. Procédé de préparation et de mise en oeuvre de compositions de plâtre de gypse ou anhydrite, ou de mélanges à base de plâtre, consistant à prémélanger au plâtre à sec, quand sa présentation est sous forme de poudre, ou à ajouter à l'eau de gâchage du plâtre, un retardateur de prise constitué par des polymères ou copolymères acryliques hydrosolubles d'un poids moléculaire inférieur à 1000 et présentant la formule générale:

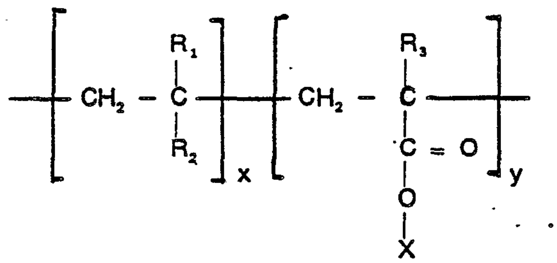
(I)

dans laquelle x et y désignent les rapports molaires des monomères, et obtenus par polymérisation de:

(x) 0 à 40 moles pour 100 moles au total d'un ou plusieurs monomères de formule:

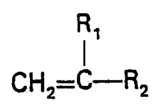
(II)

dans laquelle:

$R_1$ est un atome d'hydrogène ou radical méthyl —$CH_3$—

$R_2$ est:

— un groupe acide

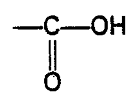

— un groupe ester

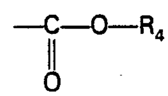

dans lequel $R_4$ est un radical alkyle inférieur contenant de 1 à 4 atomes de carbone

— ou un groupe amide

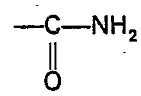

— ou un groupe nitrile —C≡N

(y) 60 à 100 moles pour 100 moles au total, d'un monomère de formule:

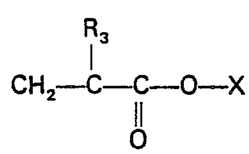
(III)

dans laquelle $R_3$ est un atome d'hydrogène ou un radical méthyl —$CH_3$.

X est un atome de sodium, de potassium, de lithium, de calcium, de magnésium, ou un groupe ammonium —$NH_4$.

2. Procédé selon la revendication 1, caractérisé en ce que le retardateur de prise est ajouté à du plâtre contenant de petites quantités de chaux.

3. Procédé selon l'une quelconque des revendications 1 à 2, caractérisé en ce que le retardateur de prise est utilisé seul ou en association avec d'autres agents auxiliaires pour plâtre (agents dispersants, moussants, réduisant l'eau, hydrofuges, fongicides, matières colorantes).

4. Procédé selon l'une quelconque des revendications 1 à 3, caractérisé en ce que le retardateur de

prise est ajouté dans une teneur variant entre 0,001 et 2 parties pour cent en poids et se situant de préférence entre 0,005 et 1 partie pour cent, teneur exprimée en matière sèche par rapport au plâtre.

5. Procédé visant à allonger le temps de prise de compositions à base de plâtre de gypse ou anhydrite, selon l'une quelconque des revendications 1 à 4.

**Patentansprüche für die Vertragsstaaten: BE, CH, DE, GB, IT, NL**

1. Verwendung von Abbindungszögerern, bestehend aus wasserlöslichen Acryl-Polymeren oder -Copolymeren mit einem Molgewicht unter 1000 der allgemeinen Formel:

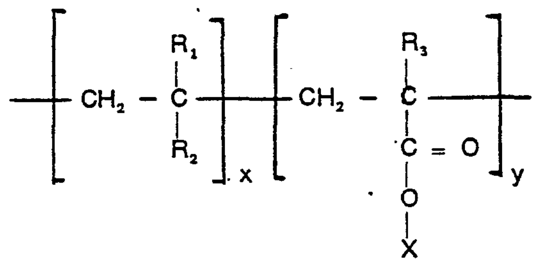

(I)

worin x und y die Molverhältnisse der Monomeren bedeuten, erhalten durch Polymerisation von:

(x) 0 bis 40 Mol pro insgesamt 100 Mole eines oder mehrerer Monomere der Formel:

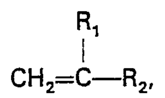

(II)

worin:

$R_1$ ein Wasserstoffatom oder eine Methylgruppe —$CH_3$ ist,

$R_2$ ist:

eine Säuregruppe

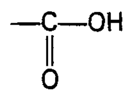

oder ein Estergruppe

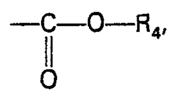

worin R eine Alkylgruppe mit 1—4 C-Atomen darstellt,

oder eine Amidgruppe

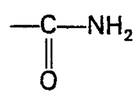

oder eine Nitrilgruppe —C≡N,

(y) 60 bis 100 Mole pro Gesamtheit eines Monomeren der Formel:

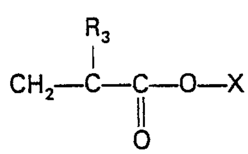

(III)

worin

R ein Wasserstoffatom oder eine Methylgruppe —$CH_3$

und X ein Atom Natrium, Kalium, Lithium, Calcium, Magnesium oder eine Ammoniumgruppe —$NH_4$ bedeuten,

in Gipszusammensetzungen auf Basis von Gips oder Anhydrit.

2. Verwendung von Abbindungsverzögerern nach Anspruch 1 als Zusätze zu Gips, der geringe Kalkmengen enthält.

3. Verwendung von Abbindungsverzögerern nach Anspruch 1 und 2 in Gemeinschaft mit anderen Hilfsmitteln für Gips (Dispergiermittel, Schaummittel, Wasserreduziermittel, wasserabweisend machende Mittel, Fungizide, Farbstoffe).

4. Verfahren zur Herstellung von Gipsmassen auf Basis von Gips oder Anhydrid oder Mischungen

auf Basis von Gips, dadurch gekennzeichnet, daß man einen Abbindungsverzögerer nach den Ansprüchen 1 bis 3, entweder mit dem Gips, wenn dieser als Pulver vorliegt, trocken vormischt oder dem Einweichwasser für den Gips zusetzt, u.zw. in einer Menge von 0,001 bis 2 Gew.-%, vorzugsweise 0,005 bis 1 Gew.-%, ausgedrückt als Trockensubstanz in Bezug auf den Gips.

5. Verfahren zur Verlängerung der Abbindungszeit von Gipszusammensetzungen auf Basis von Gips oder Anhydrit, dadurch gekennzeichnet, daß man ihnen einen oder mehrere Abbindungsverzögerer nach einem der Ansprüche 1 bis 4 zusetzt.

**Patentansprüche für den Vertragsstaat: AT**

1. Verfahren zur Herstellung von Gipsmassen auf Basis von Gips oder Anhydrid oder Mischungen auf Basis von Gips, dadurch gekennzeichnet, dass man einen Abbindungsverzögerer entweder mit dem Gips, wenn dieser als Pulver vorliegt, trocken vormischt oder Einweichwasser für den Gips zusetzt, bestehend aus wasserlöslichen Acryl-Polymeren oder -Copolymeren mit einem Molgewicht unter 1000 der allgemeinen Formel:

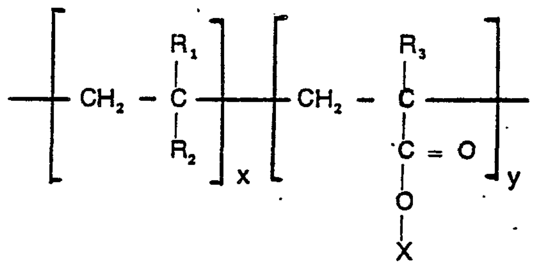
(I)

worin x und y die Molverhältnisse der Monomeren bedeuten, erhalten durch Polymerisation von:

(x) 0 bis 40 Mol pro insgesamt 100 Mole eines oder mehrerer Monomere der Formel:

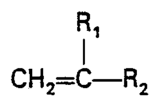
(II)

worin:

$R_1$ ein Wasserstoffatom oder eine Methylgruppe $—CH_3$ ist,
$R_2$ ist:
eine Säuregruppe 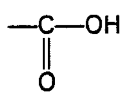

oder eine Estergruppe 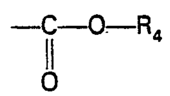

worin R eine Alkylgruppe mit 1—4 C-Atomen darstellt, oder eine Amidgruppe

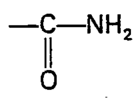

oder eine Nitrilgruppe $—C{\equiv}N$,

(y) 60 bis 100 Mole pro Gesamtheit eines Monomeren der Formel:

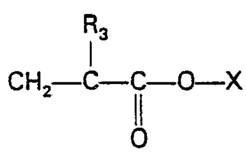
(III)

worin

R ein Wasserstoffatom oder eine Methylgruppe $—CH_3$
und X ein Atom Natrium, Kalium, Lithium, Calcium, Magnesium oder eine Ammoniumgruppe $—NH_4$ bedeuten,

in Gipszusammensetzungen auf Basis von Gips oder Anhydrit.

2. Verfahren nach Anspruch 1, dadurch gekennzeichnet dass man der Abbindungsverzögerer als Zusätze zu Gips enthaltenden geringe Kalkmengen zusetzt.

3. Verfahren nach den Ansprüche 1 und 2, dadurch gekennzeichnet, dass man der Abbindungsverzögerer in Gemeinschaft mit anderen Hilfsmitteln für Gips, (Dispergiermittel, Schaummittel, Wasserreduziermittel, wasserabweisend machende Mittel, Fungizide, Farbstoffe) zusetzt.

4. Verfahren nach einem der Ansprüche 1 bis 3, dadurch gekennzeichnet, dass man den Abbindungsverzögerer in einer Menge von 0,001 bis 2 Gew.-%, vorzugsweise 0,005 bis 1 Gew.-% ausgedrückt als Trockensubstanz in Bezug auf den Gips, zusetzt.

5. Verfahren zur Verlängerung der Abbindungzeit von Gipszusammensetzungen auf Basis von Gips oder Anhydrit, dadurch gekennzeichnet, dass man ihnen einen oder mehrere Abbindungsverzögerer nach einem der Ansprüche 1 bis 4 zusetzt.

**Claims for the Contracting States: BE, CH, DE, GB, IT, NL**

1. Use in compositions with gypsum or anhydrous plaster base of setting retardants, made up with polymers or water-soluble acrylic copolymers of molecular weight lower than 1000 and having the general formula:

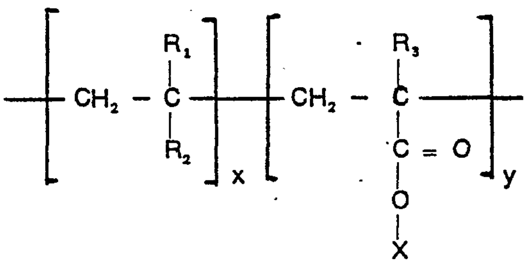

(I)

in which x and y show the molecular structures of monomers and obtained by polymerisation of:

(x) 0 to 40 moles per cent of one or several monomers of the formula:

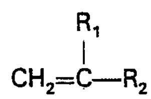

(II)

in which:

$R_1$ is a hydrogen atom or a methyl radical —$CH_3$—

$R_2$ is:

—an acidic group 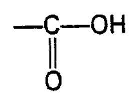

or —an ester group 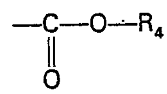

in which $R_4$ is a lower alkyl radical containing 1 to 4 carbon atoms

—or an amide group 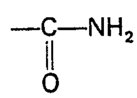

—or a nitrile group —C≡N

(y) 60 to 100 moles per cent of a monomer of the formula:

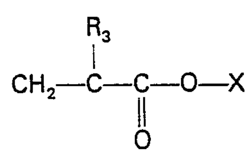

(III)

in which $R_3$ is a hydrogen atom or a methyl radical —$CH_3$,

X is an atom of sodium, potassium, lithium, calcium, magnesium or an ammonium group —$NH_4$.

2. Use of setting retardants according to claim 1 in addition to plaster containing small quantities of lime.

3. Use of setting retardants in accordance with claims 1 and 2 in association with other auxiliary agents for plaster (dispersing agents, foaming agents, water reducers, water-proofers, fungicides, colouring materials).

4. Process of preparation and production of compositions of gypsum or anhydrous plaster, or plaster based mixtures, characterised in that it consists of pre-mixing dry plaster, when its appearance is of powder form, or adding to the water for the plaster mixture, a setting retardant according to any one of claims 1 to 3 in an amount varying between 0,001 and 2 parts per 100 by weight and being preferably between 0,005 and 1 part per 100, the amount expressed in dry material in relation to the plaster.

5. Process intending to prolong the setting time of compositions of gypsum or anhydrous plaster base, characterised in that one or several retardants can be added to them in accordance with any one of claims 1 to 4.

**Claims for the Contracting State: AT**

1. Process of preparation and production of compositions of gypsum or anhydrous plaster, or plater based mixtures, characterised in that it consists of pre-mixing dry plaster, when its appearance is of powder form, or adding to the water for the plaster mixture, a setting retardant made up with polymers or water-soluble acrylic copolymers of molecular weight lower than 1000 and having the general formula:

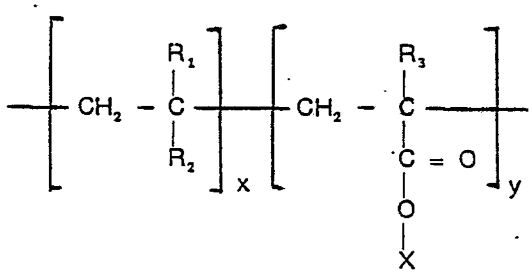
(I)

in which x and y show the molecular structures of monomers and obtained by polymerisation of:

(x) 0 to 40 moles per cent of one or several monomers of the formula:

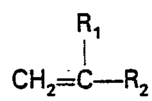
(II)

in which:

$R_1$ is a hydrogen atom or a methyl radical $—CH_3—$

$R_2$ is:

—an acidic group 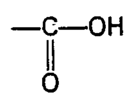

or —an ester group 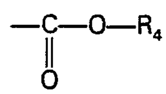

in which $R_4$ is a lower alkyl radical containing 1 to 4 carbon atoms

—or an amide group

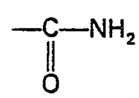

—or a nitrile group $—C{\equiv}N$

(y) 60 to 100 moles per cent of a monomer of the formula:

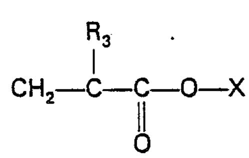
(III)

in which $R_3$ is a hydrogen atom or a methyl radical $—CH_3$,

X is an atom of sodium, potassium, lithium, calcium, magnesium or an ammonium group $—NH_4$.

2. Process according to claim 1, characterised in that the setting retardant is added to plaster containing small quantities of lime.

3. Process according to claims 1 and 2 characterised in that the setting retardant is used alone or in association with other auxiliary agents for plaster (dispersing agents, foaming agents, water reducers, water-proofers, fungicides, colouring materials).

4. Process according to any one of claims 1 to 3, characterised in that the setting retardant is added in an amount varying between 0,001 and 2 parts per 100 by weight and being preferably between 0,005 and 1 part per 100, the amount expressed in dry material in relation to the plaster.

5. Process intending to prolong the setting time of compositions of gypsum or anhydrous plaster base, characterised in that one or several retardants can be added to them in accordance with any one of claims 1 to 4.